# EUROPEAN PATENT APPLICATION

(11) **EP 4 181 163 A1**
(43) Date of publication of application: **17.05.2023**
(21) Application number: 21207891.9
(22) Date of filing: 12.11.2021
(51) Int. Cl.: H01H 1/00, H01H 35/26, H01H 35/14, H01H 11/00, H01H 35/24, G01H 11/06

(54) **ZERO-POWER OPERABLE CLASSIFICATION DEVICE AND SWITCHING DEVICE AND VOICE-OPERATED POWERLESS WAKE-UP SWITCH**

(71) Applicant: ETH Zurich, 8092 Zurich (CH)
(72) Inventor: ROBERTSSON, Johan, 8636 Wald (CH); SERRA GARCIA, Marc, 8006 Zürich (CH); DUBCEK, Tena, 8006 Zürich (CH); VAN MANEN, Dirk-Jan, 8092 Zürich (CH)

(57) **Abstract**

The classification device (1) for classifying an input signal (S1;S2) which is an aperiodic vibration signal, comprises
— a vibratory network (10) comprising a set of vibratory elements (11) and a set of coupling elements (12), each of the vibratory elements (11) being coupled to one or more of the other vibratory elements (11) by at least one of the coupling elements (12); and
— a support (5) for supporting the network (10), at least one of the vibratory elements (11) being coupled to the support (5), in particular by at least one of the coupling elements (12).

The vibratory network (10) has a shape such that the input signal (S1; S2) is classified to be a trigger signal (T) or to be a signal other than a trigger signal, wherein
— the input signal (S1; S2) is classified to be a trigger signal (T) if, in reaction to coupling the input signal (S1; S2) to the classification device (1), a magnitude related to one of the vibratory elements (11) referred to as triggering element (11t) reaches or exceeds a threshold value (d0); and
— the input signal (S1; S2) is classified to be signal other than a trigger signal if, in reaction to coupling the input signal (S1; S2) to the classification device (1), the magnitude remains smaller than the threshold value (d0).

The magnitude is a displacement or a velocity or an acceleration of the triggering element (11t).

The switching device (2) comprises such a classification device (1) and a switching element (20) operationally connected to the the classification device (1), to change a switching state of the switching element (20) when the magnitude reaches or exceeds the threshold value (d0).

## Description

The invention relates to signal classification, in particular to classification of sound signals, and to uses thereof, in particular also to switching devices. More specifically, it relates to classification of aperiodic vibration signals and applications thereof, e.g., in switching devices. In particular, the signal classification can be accomplished in a purely mechanical way and thus without consumption of electrical energy. The invention relates to methods and apparatuses (devices) according to the opening clauses of the claims. The invention can find application, e.g., in speech recognition, in switches, in particular in wake-up switches, in edifice monitoring, in traffic monitoring, in human or animal body function monitoring.

Classifying signals, such as sound signals, usually is accomplished using electrically operated devices such as computing devices.

For example, voice control is usually accomplished based on signal classification which again is based on computing which is carried out in an electronic computer.
Accordingly, if the voice control is used to wake up a device from a stand-by mode, the device will consume electricity during the stand-by mode, namely for accomplishing the classification, e.g., for distinguishing a key word or key phrase, such as "Please turn on, device" from other words or phrases or ambient noises.

In addition, carrying out classification based on electronics tends to emit plenty of electromagnetic radiation. This can lead to electromagnetic interference and makes possible to detect the classification electronics via the emitted electromagnetic radiation.

Therefore, one object of the invention is to enable signal classification without the disadvantages mentioned above. Devices shall be provided, which can carry out signal classification without consuming electrical energy, more particularly which can carry out signal classification in a purely mechanical way. This can save energy and can enable long-term operation without requiring a mains connection or replacement of batteries.

Another object of the invention is to make possible classification without emitting electromagnetic radiation or emitting only low intensity electromagnetic radiation.

Another object of the invention is to provide a event-controlled switching devices.

Another object of the invention is to provide a voice-controlled switching devices.

Another object of the invention is to provide a way to operate such devices in a powerless way.

Another object of the invention is to provide a way to manufacture such devices in a cost-efficient way.

Further objects and various advantages emerge from the description and embodiments below.

At least one of these objects can be achieved in some implementations of apparatuses and/or methods described in this disclosure.

The inventors found that it is possible to manufacture devices comprising a network of vibratory elements interconnected by coupling elements in such a way that it can classify aperiodic vibration signals, such as vibration signals representative of sound signals which represent spoken words or phrases. The vibratory elements can also be referred to as vibratory memebers, and the coupling elements can also be referred to as coupling members. Such a device shows a particular reaction if an inputted signal is classified as a trigger signal, and that particular reaction does not occur if the inputted signal is not classified as a trigger signal. E.g., with reference to the example above, if the inputted signal is classified as representing "Please turn on, device", the particular reaction occurs, whereas the particular reaction does not occur otherwise.

The network has specific vibration characteristics to accomplish this task. In particular, it can have a specific shape to accomplish this task, more specifically, it can be irregularly shaped in a special way to accomplish this task. The vibration characteristics can be largely determined by the shape of the network. For example, each of the vibratory elements and each of the coupling elements can be individually shaped and/or can be individually positioned with respect to one another, and a coupling stiffness of a coupling between vibratory elements interconnected by one or more coupling elements can be individual, too. An aperiodic vibration signal applied to the network can be "processed" by the network, so as to accomplish classification in a purely mechanical fashion, without consuming electrical energy, in particular by making use merely of the energy provided by the inputted signal itself.

The "mechanism" accomplishing the classification is very complex and not yet fully understood in all details. However, a signal inputted to the network excites the vibratory elements to different extents and at different times and with different phases, which depends on the shapes and masses of the vibratory elements and of the coupling elements, and on the strength of the coupling between vibratory elements.

The behavior of the network in reaction to coupling an input signal to the network can, however, be simulated, e.g., using finite elements methods or using a simplified model approximating the vibratory elements as harmonic oscillators and approximating the coupling elements as springs. The shapes and couplings can be parametrized and optimized for the purpose, e.g., starting from an initial configuration. In the simulation, the application of input signals coupled to the network to be classified as a trigger signal can be simulated, and the application of other input signals (which shall not be classified as a trigger signal) can be simulated. The parameters can then be adjusted to optimize for an acceptable classification accuracy, such as to maximize the occurrence of the particular reaction when input signals are (in the simulation) applied to the network which shall be classified as a trigger signal while minimizing the occurrence of the particular reaction when input signals are (in the simulation) applied to the network which shall not be classified as a trigger signal. Thus, an improved set of parameters describing the network can be found and can be used in a subsequent optimizing step. High classification accuracies can be reached when carrying out many optimizing steps, e.g., making use of a machine learning algorithm.

An amazing feature of the networks is that they can classify rather complex signals, such as signals comprising different frequency components varying differently over time. Signals of identical frequency components but with (sufficiently) varing time evolvement of the frequency components can be classifyable as different signals. This is in contrast to simple resonant detection, where merely the presence of the suitable (resonant) frequency is sufficient, irrespective of the time at which the suitable (resonant) frequency occurs during the signal.

In particular, the classification device for classifying, more particularly for purely mechanically classifying, an input signal which is an aperiodic vibration signal, can comprise:
- a network which is a vibratory network comprising a set of vibratory elements and a set of coupling elements, each of the vibratory elements being coupled, in particular being mechanically coupled, more particularly being directly mechanically coupled, to one or more of the other vibratory elements by at least one of the coupling elements; and
- a support for supporting, in particular for mechanically supporting, the network, wherein at least one of the vibratory elements is coupled, in particular is mechanically coupled, to the support, e.g., by at least one of the coupling elements; it is however also possible that at least one of the vibratory elements is directly mechanically coupled to the support.

Furthermore, the vibratory network has vibration characteristics, more particular has a shape, such that the input signal is classified to be a trigger signal or to be a signal other than a trigger signal, wherein
- the input signal is classified to be a trigger signal if, in reaction to coupling the input signal to the classification device, a magnitude related to one of the vibratory elements referred to as triggering element reaches or exceeds a threshold value; and
- the input signal is classified to be a signal other than a trigger signal if, in reaction to coupling the input signal to the classification device, the magnitude remains smaller than the threshold value.

Therein, the magnitude can in particular be
- a displacement of the triggering element, in particular a displacement of the triggering element relative to a position of rest of the triggering element;
- a velocity of the triggering element; or
- an acceleration of the triggering element.

An aperiodic vibration signal can in particular be a vibration signal comprising a timedependent mixture of a plurality of frequencies. It can be a vibration signal comprising different frequency components which evolve differently over time.

A vibratory network can in particular be a network in which vibrations can be excited, in particular wherein vibrations of the vibratory elements can be excited.

In some embodiments, the coupling between vibratory elements by coupling elements can be a pair-wise coupling between vibratory elements by coupling elements, e.g., can be a coupling between vibratory elements constituting next neighbors in the network. However it is also possible to provide that one coupling element couples three or more vibratory elements.

A purpose of coupling vibratory elements to each other by a coupling element can be to transfer vibrational energy between the vibratory elements coupled to one another by the coupling element.

The support can be a frame for the network.

The support can circumscribe the network.

In particular, the input signal is classified, as described, to be a trigger signal or to be a signal other than a trigger signal,
- because of the shapes of the vibratory elements; and/or
- because of the shapes of the coupling elements; and/or
- because of the coupling stiffnesses between the vibratory elements.

The coupling of the input signal to the classification device can be, e.g., a coupling of the input signal to the support and/or a coupling of the input signal to the network, more particularly a coupling of the input signal to one or more of the vibratory elements of the set of vibratory elements, referred to as input elements. Said coupling can be, e.g., a mechanical coupling or can be a magnetic coupling, e.g., via a magnet being fixed to the input elements. Application of the input signal to the support can excite vibrations of the network.

The displacement can be, more specifically, displacement a in a triggering direction.

The velocity of the triggering element can be, more specifically, a velocity in a triggering direction.

The acceleration of the triggering element can be, more specifically, an acceleration in a triggering direction.

The triggering direction can be a direction perpendicular to a plane defined by the network. But in other embodiments, it can be a direction at an angle (differing from 90°) to a plane defined by the network. In still other embodiments, it can be a direction parallel to a plane defined by the network.

For example, if the magnitude is the displacement, the following can be provided:
- the signal is classified to be a trigger signal if, in reaction to coupling the input signal to the classification, one of the vibratory elements referred to as triggering element undergoes a displacement, which is equal to or exceeds a threshold displacement; and
- the signal is classified to be a signal other than a trigger signal if, in reaction to coupling the input signal to the classification device, a maximum displacement of the triggering element, is smaller than the threshold displacement.

The displacement can be a displacement relative to a position of rest of the triggering element. And, as has been indicated above, the displacement can be a displacement a in a triggering direction.

According to current understanding, a high number of differently shaped items (vibratory elements; coupling elements) and/or coupling stiffnesses need to be embodied in the network in order to achieve a high classifying accuracy. Therefore:
In some embodiments, the set of vibratory elements comprises a subset of vibratory elements, wherein all the vibratory elements comprised in the subset of vibratory elements have different vibration characteristics and, in particular, have different shapes. In other words: The vibration characteristics and shape, respectively, of any two vibratory elements of the subset differ from one another.

The vibration characteristics of each vibratory element can be largely determined by the shape of the respective vibratory element.

Typically, the subset of vibratory elements comprises at least 30% of the vibratory elements in the set of vibratory elements, more particularly at least 50%. If many of the vibratory elements have different vibrational properties and shapes, respectively, it can be easier to achieve a high classification accuracy.

In some embodiments, the set of coupling elements comprises a subset of coupling elements, wherein all the coupling elements comprised in the subset of coupling elements have different vibration characteristics and, in particular, have different shapes. In other words: The vibration characteristics and shape, respectively, of any two coupling elements of the subset differ from one another.

The vibration characteristics of each coupling element can be largely determined by the shape of the respective coupling element.

Typically, the subset of coupling elements comprises at least 30% of the coupling elements in the set of coupling elements, more particularly at least 50%. If many of the coupling elements have different vibrational properties and shapes, respectively, it can be easier to achieve a high classification accuracy.

In some embodiments, the network comprises a set of associated pairs, wherein each of the associated pairs comprises (more particularly: consists of) two of the vibratory elements of the set of vibratory elements which are coupled to one another by one or more of the coupling elements to establish a coupling between two the vibratory elements which has a coupling stiffness; and the coupling stiffnesses of the couplings of all the associated pairs of the set of associated pairs differ from one another.

Typically, the set of associated pairs comprises at least 30% of the associated pairs in the network, more particularly at least 50%. If many of the coupling stiffnesses between vibratory elements of the network are different from one another, it can be easier to achieve a high classification accuracy.

A coupling stiffness can in particular describe how strongly a vibration of one of the vibratory elements of the associated pair excites a vibration of the other vibratory element of the associated pair.

The coupling stiffness of a coupling between two coupled vibratory elements can be varied in different ways, e.g., by varing the shape of one or more of the coupling elements coupling the vibratory elements; by varing, for at least one of the coupling elements and for one or both of the vibratory elements, a location at the respective vibratory element where the at least one coupling element couples to the respective vibratory element.

In some embodiments, the classification device comprises a housing enclosing the network, in particular hermetically enclosing the network. This way, the network can be protected from some undesired external influences. The housing can comprise a portion of the support.

In some embodiments, the network is made of a material having a Young's modulus of at least 50 GPa, more particularly of at least 70 GPa. Materials with a lower Young's modulus usually have a too high dissipation. A low dissipation however is desirable in order to have little damping in the network.

In some embodiments, the network is made of a non-metal material. Metals usually have a too high dissipation. A low dissipation however is desirable in order to have little damping in the network.

The network can be made of, e.g., silicon, in particular single-crystalline silicon, or of silicon oxide (SiO2), more particularly of quartz, or of silicon nitride (Si3N4), in particular amorphous silicon nitride.

In some embodiments, the network is integrally formed. In other words, the network is made in one piece or is a unitary part. This makes possible that the network can be manufactured cost-efficiently and with high precision. For example, starting from an integrally formed blank, such as from a wafer, material is removed from the blank, to manufacture the network.

In some embodiments, the network together with the support is integrally formed.

In some embodiments, the network is generally plate-shaped, the plate having a plurality of openings extending therethrough. This makes possible that the network can be manufactured cost-efficiently and with high precision, e.g., from a wafer, such as a semiconductor wafer.

In particular, the openings can be defined by side walls which are aligned perpendicularly to the two large sides of the plate.

In some embodiments, the vibratory elements are generally plate-shaped.

In some embodiments, the coupling elements are generally plate-shaped.

In some embodiments, the set of vibratory elements comprises at least 25 vibratory elements and/or the set of coupling elements comprises at least 35 coupling elements. More particularly the set of vibratory elements can comprise at least 50 vibratory elements and/or the set of coupling elements can comprise at least 70 coupling elements. The complexer the trigger signal and the input signals, the more vibratory elements and coupling elements are needed to accomplish a good classification accuracy.

In one embodiment, the vibratory elements of the set of vibratory elements are arranged in an array, in particular in a rectangular array or more particularly in a square array.

However, other arrays, e.g., hexagonal ones, like in close-packing of equal spheres, are also possible. A systematic arrangement of the vibratory elements can simplify determining the shape of the network, e.g., in simulations.

The classification device can be used for various purposes. The classification device can be used, e.g., as an actuator. For example, actuation shall take place only for input signals classified as a trigger signal. In particular: The reaching or exceeding the threshold value can be used to actuate, e.g., to actuate a switching element.

An important application is a switching device, in particular a switching device which changes its switching state when the network classifies an input signal to be a trigger signal.

In particular, the switching device can comprise a classification device as herein described and a switching element. Therein, the classification device can be operationally connected to the switching element to change a switching state of the switching element from a first switching state to a second switching state when the magnitude related to the triggering element reaches or exceeds the threshold value. In other words, in response to reaching or exceeding the threshold value, and thus to classifying an input signal to be a trigger signal, the switching element switches - because of the behavior of the triggering element.

In some embodiments, the switching device is wake-up switch, in particular a powerless wake-up switch.

In some embodiments, the switching device is voice-operated switch, in particular a powerless voice-operated switch. The network in this case is designed (shaped) for classifying aperiodic vibration signals which are representative of voice-generated sound.

In some embodiments, the switching device is an event detector, in particular a powerless event detector. Events, such as heartbeats, identified by vibration signals they produce, can be detected - based on the classification.

In some embodiments, the switching element resets from the second switching state state to the first switching state when subsequently to the reaching or exceeding of the threshold value, the magnitude becomes and remains smaller than the threshold value for at least a reset time.

In some embodiments,
- the magnitude is the displacement, and the switching element comprises a first contact member which is movable from a first position to a second position, the classification device being arranged in proximity to the switching element to move the first contact member from the first position to the second position when the displacement of the triggering element reaches or exceeds a threshold displacement, to change the switching state from the first switching state to the second switching state.

In such embodiments, the switching element can be, e.g., a mechanical switch.

In some embodiments,
- the magnitude is the velocity, and the switching element comprises a coil, the switching element changing from the first switching state to the second switching state when a voltage induced in the coil exceeds a threshold voltage, the classification device comprising a magnet fixed to the triggering element, the magnet being arranged in proximity to the coil to induce in the coil a voltage which reaches or exceeds the threshold voltage when the velocity of the triggering element reaches or exceeds a threshold velocity, to change the switching state from the first switching state to the second switching state.

In such embodiments, the switching element can be, e.g., a semiconductor switch, e.g., comprising a transistor, driven by the voltage induced in the coil.

Similarly, in some embodiments,
- the magnitude is the velocity, and the switching element comprises a magnet, and the classification device comprising a coil fixed to the triggering element, the coil being operationally connected to the the switching element, the switching element changing from the first switching state to the second switching state when a voltage induced in the coil exceeds a threshold voltage, the magnet being arranged in proximity to the coil to induce in the coil a voltage which reaches or exceeds the threshold voltage when the velocity of the triggering element reaches or exceeds a threshold velocity, to change the switching state from the first switching state to the second switching state.

In such embodiments, the switching element can be, e.g., a semiconductor switch, e.g., comprising a transistor, driven by the voltage induced in the coil.

In some embodiments,
- the magnitude is the acceleration, and the switching element changes from the first switching state to the second switching state when a voltage applied to a control input of the switching element exceeds a threshold voltage, the classification device comprising a piezo device fixed to the triggering element, the piezo device being in electrical communication with the control input to apply to the control input a voltage which reaches or exceeds the threshold voltage when the acceleration of the triggering element reaches or exceeds a threshold acceleration, to change the switching state from the first switching state to the second switching state.

In such embodiments, the switching element can be, e.g., a semiconductor switch, e.g., comprising a transistor, driven by the voltage induced in the coil.

In some embodiments, the switching device comprises a converter coupled to the network, for converting sound waves in a medium into the input signal when the converter is (vibratorily) coupled to the medium. This way, various kinds of signals (more particularly: of aperiodic signals) can be classified. The converter converts the sound waves into a vibration signal which is coupled to the network as an input signal.

For example, the converter can comprise a membrane for picking up sound in a fluid, in particular in ambient air, and the support is vibratorily coupled to the membrane, e.g., fixed to the membrane, to transfer vibrations of the membrane into the network. This way, sound signals can be classified, via the conversion accomplished by the membrane. It is furthermore possible to ensure by means of the membrane that the generated input signal has an amplitude suitable for the classification.

In some embodiments, the switching device comprises a fixation member for fixing the classification device to a vibratory item to be monitored by the switching device. Such a fixation member can comprise, e.g., adhesive tape, glue, solder, a screw, a bolt, a nail, a clamp, or fasteners or fixation means. This way, vibrations of the vibratory item to be monitored can be transmitted to the classification device and to the network, respectively.

The vibratory item to be monitored can be, e.g.,
- a chest (human or animal), e.g., in case heartbeat shall be monitored;
- an edifice, such as a house or a bridge, e.g., when monitoring shall detect irregular movements;
- ground, such a street, e.g., when passing-by of vehicles shall be monitored.

The classification device and the switching device, respectively, can be used for powerlessly waking up electrically operated devices. For example:
The electrically operated device can comprise a power supply for supplying the electrically operated device with energy when the power supply is switched on, and a switching device as herein described, the switching device being operationally connected to the power supply to switch on the power supply when the switching state of the switching element is changed from the first switching state to the second switching state.

This way, e.g., an electrically operated device with a voice-controlled powerless wake-up switch can be realized.

Alternatively, the switching device can be operationally connected to the power supply to switch off the power supply when the switching state of the switching element is changed from the first switching state to the second switching state. In this case, e.g., an electrically operated device with a voice-controlled powerless shut-down switch can be realized.

The method for manufacturing a classification device as herein described can comprise
- providing a blank;
- producing openings in the blank by removing material from the blank to define the vibratory elements of the set of vibratory elements and the coupling elements of the set of coupling elements.

Accordingly, the blank can be structured (shaped) to create the network. The blank can be an integrally formed blank. The producing the openings in the blank by removing material from the blank can also define the support. This way, the network and the support can be, at least in part, created simultaneously.

In some embodiments, the blank is a wafer. In particular the blank can be one of
- a semiconductor wafer, more particularly a wafer of single-crystalline silicon;
- a silicon oxide wafer, more particularly a quartz wafer;
- a silicon nitride wafer, more particularly a wafer of amorphous silicon nitride.

The openings can be passing through the blank, e.g., openings passing through the wafer, i.e. openings extending from one (large) side of the wafer to the opposite (large) side of the wafer.

In some embodiments, the blank is, during producing openings in the blank, attached to a further wafer. The further wafer can be, e.g., a multilayer wafer, more particularly a multilayer wafer comprising an inhibition layer, such as an oxide layer, e.g., a silicon oxide layer, on a carrier layer, such as a silicon wafer. The blank can, for example be attached to the inhibition layer.

After producing the openings in the blank, said further wafer can be removed therefrom, at least in part, to set free the network from portions of the further wafer. It is furthermore possible to not remove portions of said further wafer from the blank, namely in portions of the blank which are comprised in the support.

In some embodiments, the removing material from the blank comprises applying a microfabrication process. This way, the very high precision required can be achievable. In particular, the removing material from the blank can comprise one of
- photolithography and subsequent etching, in particular reactive ion etching or wet etching;
- electron beam lithography and subsequent etching, in particular reactive ion etching;
- laser cutting.

Photolithography and subsequent etching is most promising, since the required precision can be achieved very cost-efficiently.

As will be readily understood, features mentioned herein with respect to a method can analogously apply for a described device as well, such as to the device. And, vice versa, features mentioned herein with respect to a device can analogously apply for a described method as well. The achievable effects correspond to each other.

The invention comprises devices with features of corresponding methods according to the invention, and, vice versa, also methods with features of corresponding devices according to the invention.

The advantages of the devices basically correspond to the advantages of corresponding methods, and, vice versa, the advantages of the methods basically correspond to the advantages of corresponding devices.

Further embodiments and advantages emerge from the following description and the enclosed figures and from the dependent claims.

Below, the invention is described in more detail by means of examples and the included drawings. In the drawings, same reference numerals refer to same or analogous elements. The figures show schematically:
- Fig. 1A: a disc-shaped classification device comprising a vibratory network comprising vibratory elements coupled by coupling elements, in a top view;
- Fig. 1B: a cross-section through the classification device of Fig. 1A;
- Fig. 2: a detail of the classification device of Figs. 1 A, 1B featuring a vibratory element, in a top view;
- Fig. 3: a symbolic illustration of a simulation model of the vibratory network of Figs. 1A, 1B;
- Fig. 4: symbolic illustrations of two input signals and of a signal representative of a trigger signal;
- Fig. 5: histograms representing simulation results for a randomized initial parameter set;
- Fig. 6: histograms representing simulation results for an optimized parameter set;
- Fig. 7: histograms representing experimental results for the optimized parameter set of Fig. 6;
- Fig. 8A: a schematic illustration of a switching device comprising a mechanical switching element in a first switching state;
- Fig. 8B: a schematic illustration of the switching device of Fig. 8A in a second switching state;
- Fig. 9: a schematic illustration of a switching device comprising a semiconductor switching element and a coil;
- Fig. 10: a schematic illustration of a switching device comprising a semiconductor switching element and a classification device comprising a piezo element;
- Fig. 11: a schematic illustration of an electrically operated device with a soundoperated powerless wake-up switch.

The described embodiments are meant as examples or for clarifying the invention and shall not limit the invention.

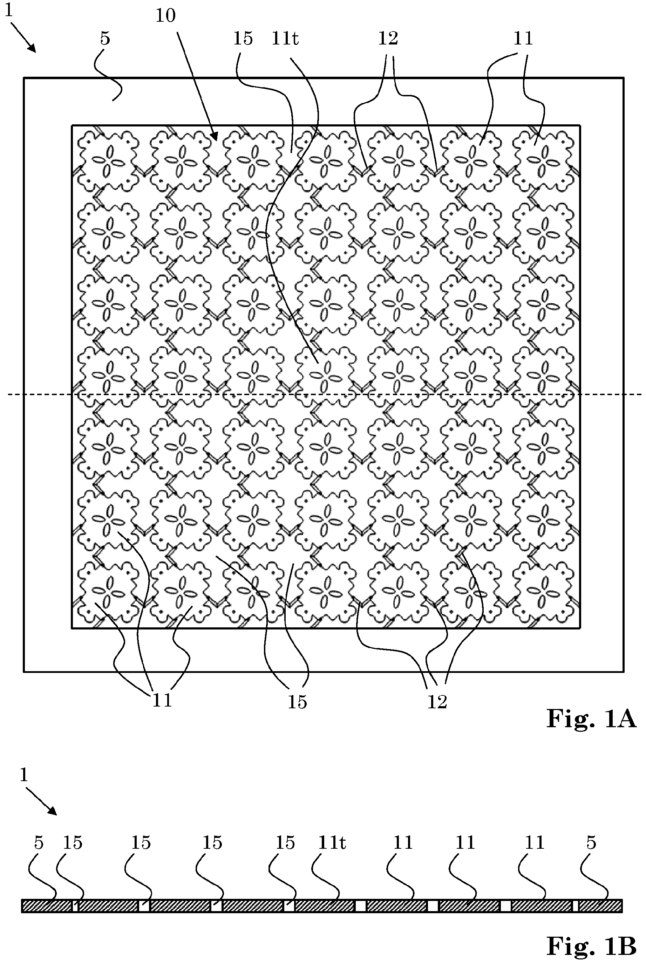

Fig. 1A shows a disc-shaped classification device 1 comprising a vibratory network 10 comprising vibratory elements 11 coupled by coupling elements 12, in a top view. The vibratory network 10 also comprises a frame-like support 5 for mechanically supporting the network 10. Fig. 1B shows a cross-section through the classification device 1 of Fig. 1A at the dashed line in Fig. 1A.

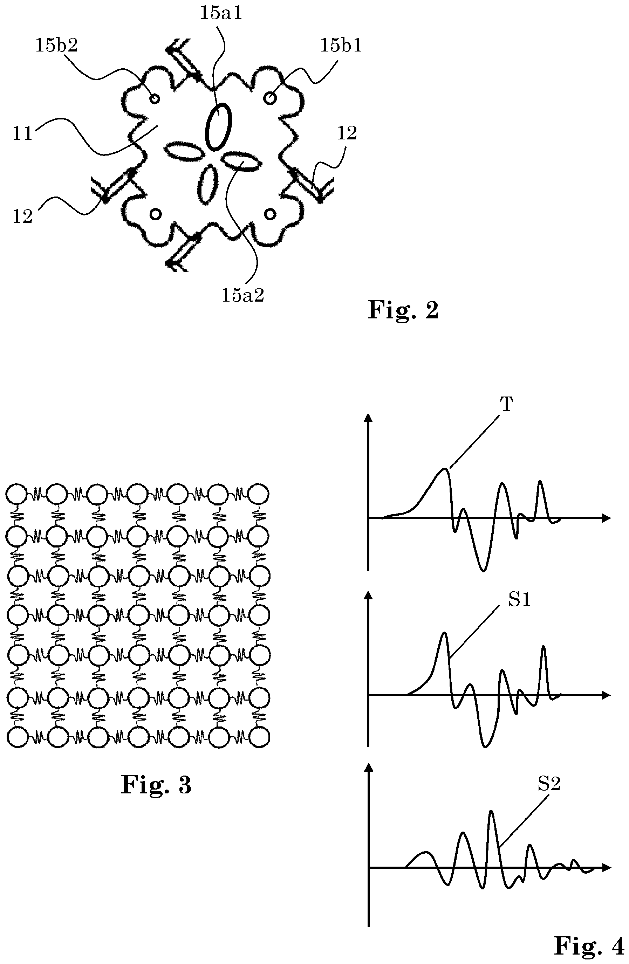

The vibratory elements 11 are arranged in a two-dimensional square array of 7 times 7 vibratory elements. Each of the vibratory elements 11 is mechanically coupled with at least one further vibratory element by at least one coupling element 12. Not visible in Fig. 1A, but explained below at Fig. 2, all of the vibratory elements 11 or at least most of them have an individual shape. Furthermore, also all of the coupling elements 12 or most of them can have an individual shape. And still furthermore, all of the coupling elements 12 or most of them can effect an individual coupling stiffness between the respective pair of vibratory elements 11 coupled by the respective coupling element 12, e.g., due to the shape of the coupling element 12 or due to the position where the coupling element connects to the vibratory element(s) 11.

The device 1 can be manufactured by well-established processes such as with photolithographic processe and subsequent etching; a very high precision is required for good results. Starting from a wafer, e.g., a single-crystalline silicon wafer, as a blank, material is removed from the wafer, creating openings 15 which eventually define the vibratory elements 11 and the coupling elements 12.

Vibrations coupled to the device 1, e.g., to support 5, can propagate in the network 10, exciting vibrations in all (or a most of) the vibratory elements 11, wherein the vibratory elements 11 tend to vibrate at different frequencies, at different amplitudes and with different time developments. The interaction of all the vibratory elements 12 is very complex and difficult to predict, as vibrations of any of the vibratory elements 11 interact not only with vibrations of next-neighboring vibratory elements 11, but also with vibratory elements 11 which are more distant.

However, it is readily possible to simulate the behavior of the network 10, e.g., based on finite elements methods.

Since the computing power required for such simulations is, even to today's standards, quite high, it is possible, in the optimization process sketched further below, to simplify the results from the simulation and condense them into a simple springs-and-masses model which is much simpler to simulate.

Fig. 3 shows a symbolic illustration of such a simple springs-and-masses model for the vibratory network 10 of Figs. 1A, 1B. The support 5 and the coupling of the network 10 to the support 5 is not illustrated in Fig. 3. As will be easily understood, even determining the vibrations carried out by the 49 masses (approximating the 49 vibratory elements 11) coupled by springs (approximating the coupling elements 12) in this simplified network is still time consuming.

Back to the classification device 1 and the real network 10 illustrated in Figs. 1A, 1B. The purpose thereof is to classify inputted vibration signals, in particular wherein such input signals are aperiodic.

The classification device 1 can be designed such that an input signal is classified to be a trigger signal or to be not a trigger signal.

To illustrate this very schematically, Fig. 4 shows symbolic illustrations of two input signals S1, S2 and of a signal representative of a trigger signal T. The x-axis is the time axis, the y-axis is, e.g., an amplitude axis. Assuming that signal T is a signal having typical characteristics of a signal to be classified to be a trigger signal, it will be understood that signal S1, if coupled to the device 1, should be classified to be a trigger signal. On the other hand, signal S2 obviously has properties rather distinct from those of signal T. And accordingly, it will be understood that signal S2, if coupled to the device 1, should be classified to be not a trigger signal.

In the instant example, the classification device 1 is designed such that an input signal is classified to be a trigger signal if it is representative of the sound of the spoken word "four", and that an input signal is classified not to be a trigger signal if it is representative of the sound of the spoken word "three".

For testing and verifying the function of the device 1, vibration signals representative of hundreds of versions of the spoken word "three" (positive test signals) and "four" (negative test signals), respectively, have been coupled to the device 1. Therein, for practical purposes, corresponding sound data were modulated onto a 72 kHz carrier wave and coupled to the support 5 by piezo actuators.

The various versions of the spoken word "three" and "four", respectively, were spoken by different people, with different accents, in different acoustic environments.

In order to determine a shape of the network which has suitable vibration characteristics so as to accomplish the classification task, the shape of the network has been parametrized with several optimization parameters.

The optimization parameters did comprise parameters influencing the shape of the vibratory elements 11, namely the four diameters of the small circular openings in the corners of each vibratory element 11 and the size of the four elliptic openings close to the middle of each vibratory element 11.

Fig. 2 illustrates a vibratory element 11 where, e.g., the small circular openings 15b1 and 15b2 have different diameters, and where the elliptic opening 15a1 is larger than elliptic opening 15a2.

Further optimization parameters can relate to the coupling elements 12, e.g., to their shape or to the location at which they couple to a vibratory element 11. Thiscan be one way to vary a coupling stiffness between vibratory elements 11 coupled by a coupling element 11.

How is determined whether an input signal is to be classified to be a trigger signal or to be classified to be not a trigger signal? A magnitude related to one of the vibratory elements referred to as triggering element can be used for this. In Figs. 1A, 1B, the triggering element is denoted 11t. That magnitude is also know as a "dynamic variable" of the triggering element 11t: That magnitude can be a displacement or a velocity or an acceleration of the triggering element 11t. It is noted that displacement, velocity and acceleration are closely related.

In the instant example, the magnitude is a velocity of the triggering element 11t along a direction perpendicular to the wafer plane. However, alternatively, it could also be, e.g., a displacement of the triggering element 11t relative to a position of rest of the triggering element 11t along a direction perpendicular to the wafer plane.

When said velocity of the triggering element 11t reaches or exceeds a threshold value (threshold velocity) in response to coupling an input signal to the device 1, that input signal is classified to be a trigger signal. Otherwise, i.e. if the triggering element 11t does not reach said threshold value (threshold velocity), the input signal is classified to be not a trigger signal.

In a simulation-based optimization process, e.g., involving machine learning steps, the shape of the network can be improved, typically in many single optimization steps, to achieve an improved classification accuracy.

For example, one starts with an initial set of optimization parameters (and thus with an initial shape of the network), which, e.g., may be random, but with small deviations from an average only. In the simulation, e.g., a finite-element based simulation or a simplified masses-and-springs model, the positive test signals ("three") and the negative test signals ("four") are coupled to the device, and the velocity of the triggering element is monitored - to determine whether or not it stays below the threshold value. Of course, the resulting classification is unlikely to be good in the beginning. Then, the optimization parameters are or a portion thereof is varied, and again, the test signals are applied, and the velocity of the triggering element is monitored. Also at this point, the resulting classification is unlikely to be good. However, from the correlation between applied changes to the optimization parameters and the resulting classifications, more target-oriented parameter changes can be found, e.g., based on machine learning.

After a typically high number of optimization steps, a good classification accuracy can result.

It is also possible to carry out the described optimization a number of times, each time starting from a different initial set of optimization parameters and to finally select best one of the optimized parameter set (and shapes, respectively), such as the one with the highest classification accuracy.

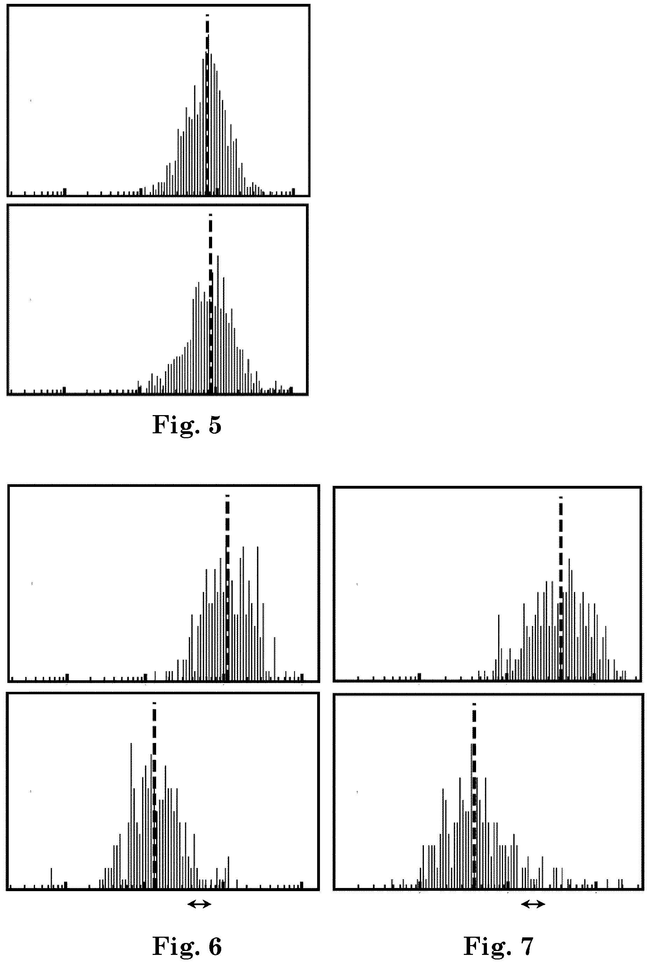

In the instant example, a randomized initial set of optimization parameters did not show a notable classification accuracy, as to be expected. This can be inferred from Fig. 5.

Fig. 5 shows histograms representing simulation results for a randomized initial parameter set. The upper panel relates to positive test signals ("four"), the lower panel relates to negative test signals ("three"). In both panels, the x-axis scales with the square of the magnitude, i.e. with the square of the maximum velocity of the triggering element; and along the y-axis, the number of test signals in a histogram bin is shown.

The thick dashed line indicates an approximate position of a center of the respective distribution of the histrogram bins.

Fig. 6 shows, in the same way as Fig. 5, histograms representing simulation results for an optimized parameter set. Obviously, the shape of the network has been successfully optimized to classify positive test signals ("four") to be trigger signals while classifying negative test signals ("three") to be not trigger signals. As usual in classification, no 100% classification accuracy has been reached: The distribution in the upper panel has an overlap with the distribution in the lower panel. Selecting the threshold value suitably within the range indicated by the double-ended arrow, however, resulted in a classification accuracy of 91.1%.

Fig. 7 shows, in the same way as Figs. 5 and 6, histograms representing experimental results for the optimized parameter set of Fig. 6. In the experiment, the velocity of the triggering element (cf. item 11t in Figs. 1A, 1B) was measured using a laser making use of the Doppler effect. Alternatively, it would have been possible to measure the velocity of the triggering element using a magnet fixed to the triggering element and a coil positioned in proximity to the magnet. A voltage induced in the coil by the moving magnet is proportional to the velocity of the magnet (relative to the coil).

Very consistent with the simulation results, a good classification has been reached, having a classification accuracy of 89% with the threshold value selected within the range indicated by the double-ended arrow.

The reaching or exceeding a threshold value, such as a threshold displacement or threshold velocity or threshold acceleration, can be used for actuation purposes, for example to control a swithing element. Event controlled, e.g., voice-controlled, switches can be realized this way.

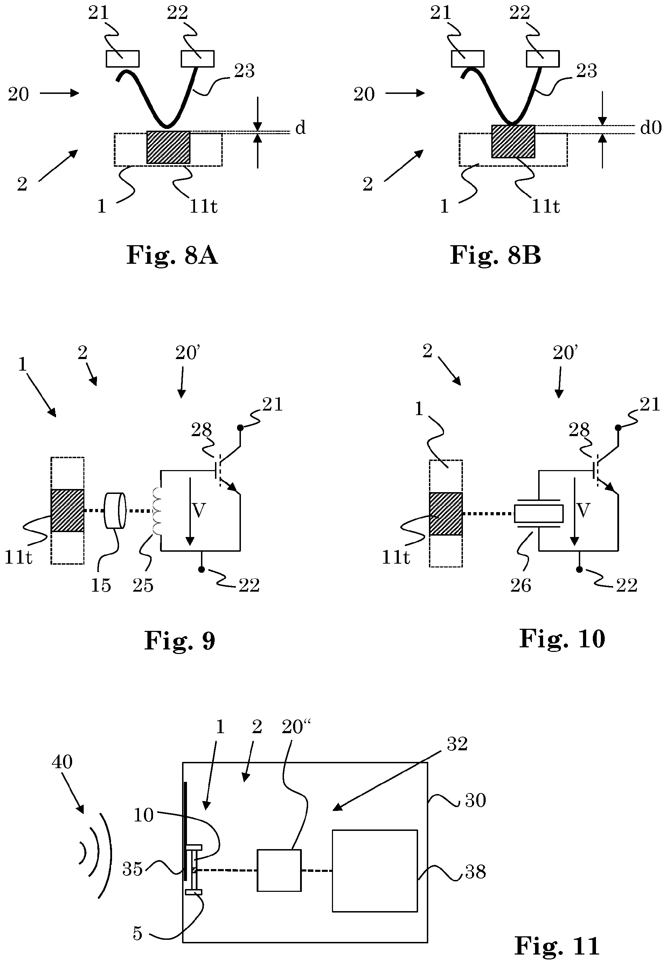

Fig. 8A shows a schematic illustration of a switching device 2 comprising a mechanical switching element 20 in a first switching state which is an open (non-conducting) state. Fig. 8B shows schematic illustration of the switching device 2 of Fig. 8A in a second switching state which is a closed (conducting) state.

The switching element 20 comprises two terminals 21, 22 and a contact member 23 which is movable to either connect (second switching state) or to not connect (first switching state) the two terminals 21, 22.

Switching device 2 further comprises a classification device 1 which is illustrated very schematically in Figs. 8A, 8B. It comprises a trigger element 11t.

In Fig. 8A is illustrated the case that an input signal coupled to the classification device 1 results in a maximum displacement d of the trigger element 11t which is smaller than the threshold value d0. In Fig. 8B, however, the case is illustrated that an input signal coupled to the classification device 1 results in a maximum displacement of the trigger element 11t which reaches the threshold value d0. By reaching (or exceeding) the threshold displacement d0, trigger element 11t moves the contact member 23 such that it contacts terminal 21, so as to establish a closed electrical connection between the terminals 21, 22.

Fig. 9 shows a schematic illustration of a switching device 2 comprising a semiconductor switching element 20' and a coil 25.

The switching element 20' comprises two terminals 21, 22 and a transistor 28 which can be controlled by a control voltage V to either connect (second switching state) or to not connect (first switching state) the two terminals 21, 22. Switching element 20' further comprises the coil 25.

Switching device 2 further comprises a classification device 1 which is illustrated very schematically in Figs. 9. It comprises a trigger element 11t and a magnet 15 operationally connected to trigger element 11 (illustrated by a dotted line), e.g., fixed thereto.

Magnet 15 and coil 25 are operationally connected to one another (illustrated by a dotted line), e.g., by being located in close proximity to one another, such that movements of magnet 15 (originating from movements of trigger element 11t) can induce a voltage in coil 25. The induced voltage is proportional to the velocity of the magnet 15 (and thus to the velocity of trigger element 11t). The induced voltage controls the transistor 28 as the control voltage V. If the velocity reaches or exceeds a threshold velocity, control voltage V reaches or exceeds a threshold voltage. The switching device 2 is selected or designed such that the switching element 20' changes its switching state when the control voltage V reaches or exceeds said threshold voltage.

Fig. 10 shows a schematic illustration of a switching device 2 comprising a semiconductor switching element 20' and a classification device 1 comprising a piezo element 26.

The switching element 20' comprises two terminals 21, 22 and a transistor 28 which can be controlled by a control voltage V to either connect (second switching state) or to not connect (first switching state) the two terminals 21, 22.

The classification device 1 is illustrated very schematically in Figs. 10. It comprises a trigger element 11t, the piezo element 26 being operationally connected to trigger element 11 (illustrated by a dotted line), e.g., fixed thereto.

Piezo element 26 and switching element 20' are operationally connected to one another (illustrated by a dotted line), e.g., to feed to switching element 20' a voltage produced by piezo element 26 in reaction to an acceleration of piezo element 26. The piezoproduced voltage is proportional to acceleration of the piezo element26 (and to the acceleration of trigger element 11t). It controls the transistor 28 as the control voltage V. If the acceleration reaches or exceeds a threshold acceleration, control voltage V reaches or exceeds a threshold voltage. The switching device 2 is selected or designed such that the switching element 20' changes its switching state when the control voltage V reaches or exceeds said threshold voltage.

Fig. 11 shows a schematic illustration of an electrically operated device 30 with a sound-operated powerless wake-up switch 32. The electrically operated device 30 comprises a switching device 2 as herein described, e.g., one of the above-described ones, and a power supply 38 which is operationally connected to the switching device 2 for being switched on by it.

Switching device 2 comprises a switching member 20" operationally connected to a classification device 1 of the herein described kind, thus comprising a support 5 and a network 10. The network 10 comprises a triggering element operationally connected to the switching member 20".

Classification device 1, e.g., its support 5, is vibrationally coupled to a membrane 35 of the electrically operated device 30, so as to convert sound waves 40 in ambient air into vibrational input signals for the classification device 1.

The network 10 of classification device 1 can be shaped such that the electrically operated device 30 and, more particularly, its power supply 38, is switched on (out of stand-by mode) in reaction sound waves 40 representative of a spoken keyword or phrase (e.g., "three") impinging on membrane 35 - with a reasonable classification accuracy:
The acoustic sound signal excites vibrations of membrane 35 which are converted to vibrational input signals to classification device 1. If the so-obtained input signal is classified to be a trigger signal (corresponding to a spoken keyword), the magnitude related to the triggering element will reach or exceed a threshold value, such that switching element 20" will switch on power supply 38, thus waking up electrically operated device 30 out of stand-by mode.

Switching device 2 does not require electrical energy for this operation.

The classification operation which in prior art is usually accomplished by means of computers, thus consuming electrical energy. However, the classification can be carried in a purely mechanical fashion, as explained above.

## Claims

1. Classification device for classifying an input signal which is an aperiodic vibration signal, the classification device comprising
- a network which is a vibratory network comprising a set of vibratory elements and a set of coupling elements, each of the vibratory elements being coupled to one or more of the other vibratory elements by at least one of the coupling elements; and
- a support for supporting the network, at least one of the vibratory elements being coupled to the support, in particular by at least one of the coupling elements;
wherein the vibratory network has a shape such that the input signal is classified to be a trigger signal or to be a signal other than a trigger signal, wherein
- the input signal is classified to be a trigger signal if, in reaction to coupling the input signal to the classification device, a magnitude related to one of the vibratory elements referred to as triggering element reaches or exceeds a threshold value; and
- the input signal is classified to be signal other than a trigger signal if, in reaction to coupling the input signal to the classification device, the magnitude remains smaller than the threshold value;
wherein the magnitude is
- a displacement of the triggering element relative to a position of rest of the triggering element;
- a velocity of the triggering element; or
- an acceleration of the triggering element.

2. The classification device according to claim 1, wherein one or more of:
- the set of vibratory elements comprising a subset of vibratory elements, wherein all the vibratory elements comprised in the subset of vibratory elements have different shapes;
- the set of coupling elements comprising a subset of coupling elements, wherein all the coupling elements comprised in the subset of coupling elements have different shapes;
- the network comprising a set of associated pairs, wherein each of the associated pairs comprises two of the vibratory elements of the set of vibratory elements which are coupled to one another by one or more of the coupling elements to establish a coupling between two the vibratory elements which has a coupling stiffness, wherein the coupling stiffnesses of the couplings of all the associated pairs of the set of associated pairs differ from one another.

3. The classification device according to claim 1 or to claim 2, wherein the network is integrally formed from a non-metal material having a Young's modulus of at least 50 GPa, more particularly of at least 70 GPa.

4. The classification device according to one of claims 1 to 3, wherein the network is generally has the shape of a plate having a plurality of openings going through the plate.

5. The classification device according to one of claims 1 to 4, the set of vibratory elements comprising at least 25 vibratory elements and the set of coupling elements comprising at least 35 coupling elements, more particularly the set of vibratory elements comprising at least 50 vibratory elements and the set of coupling elements comprising at least 70 coupling elements.

6. Use of a classification device according to one of claims 1 to 5 as an actuator, in particular as an actutor for actuating a switching element.

7. Switching device, comprising a classification device according to one of claims 1 to 5 and a switching element, the classification device being operationally connected to the switching element to change a switching state of the switching element from a first switching state to a second switching state when the magnitude related to the triggering element reaches or exceeds the threshold value.

8. The switching device according to claim 7, wherein
- the magnitude is the displacement, and the switching element comprises a first contact member which is movable from a first position to a second position, the classification device being arranged in proximity to the switching element to move the first contact member from the first position to the second position when the displacement of the triggering element reaches or exceeds a threshold displacement, to change the switching state from the first switching state to the second switching state;
- the magnitude is the velocity, and the switching element comprises a coil, the switching element changing from the first switching state to the second switching state when a voltage induced in the coil exceeds a threshold voltage, the classification device comprising a magnet fixed to the triggering element, the magnet being arranged in proximity to the coil to induce in the coil a voltage which reaches or exceeds the threshold voltage when the velocity of the triggering element reaches or exceeds a threshold velocity, to change the switching state from the first switching state to the second switching state;
- the magnitude is the velocity, and the switching element comprises a magnet, and the classification device comprising a coil fixed to the triggering element, the coil being operationally connected to the the switching element, the switching element changing from the first switching state to the second switching state when a voltage induced in the coil exceeds a threshold voltage, the magnet being arranged in proximity to the coil to induce in the coil a voltage which reaches or exceeds the threshold voltage when the velocity of the triggering element reaches or exceeds a threshold velocity, to change the switching state from the first switching state to the second switching state; or
- the magnitude is the acceleration, and the switching element changing from the first switching state to the second switching state when a voltage applied to a control input of the switching element exceeds a threshold voltage, the classification device comprising a piezo device fixed to the triggering element, the piezo device being in electrical communication with the control input to apply to the control input a voltage which reaches or exceeds the threshold voltage when the acceleration of the triggering element reaches or exceeds a threshold acceleration, to change the switching state from the first switching state to the second switching state.

9. The switching device according to claim 7 or 8, comprising a converter coupled to the network, for converting sound waves in a medium into the input signal when the converter is coupled to the medium, in particular comprising a membrane for picking up sound in a fluid, in particular in ambient air, the support being fixed to the membrane.

10. The switching device according to one of claims 7 to 9, which is a powerless voice-operated switch.

11. Electrically operated device, comprising a power supply for supplying the electrically operated device with energy when the power supply is switched on, and a switching device according to one of claims 7 to 10, the switching device being operationally connected to the power supply to switch on the power supply when the switching state of the switching element is changed from the first switching state to the second switching state.

12. A method for manufacturing a classification device according to one of claims 1 to 5, the method comprising
- providing a blank;
- producing openings in the blank by removing material from the blank to define the vibratory elements of the set of vibratory elements and the coupling elements of the set of coupling elements.

13. The method according to claim 12, the blank being a wafer, in particular being a wafer of a material having a Young's modulus of at least 50 GPa, more particularly being one of
- a semiconductor wafer;
- a quartz wafer;
- a silicon nitride wafer.

14. The method according to claim 13, the blank being attached to a further wafer during producing openings in the blank, in particular wherein the further wafer is a multilayer wafer, more particularly a multilayer wafer comprising an inhibition layer on a carrier layer.

15. The method according to one of claims 12 to 14, the removing material from the blank comprising applying a microfabrication process, in particular one of
- photolithography and subsequent etching, in particular reactive ion etching;
- electron beam lithography and subsequent etching, in particular reactive ion etching;
- laser cutting.
